# EUROPEAN PATENT APPLICATION

(11) **EP 4 389 383 A1**
(43) Date of publication of application: **26.06.2024**
(21) Application number: 22215939.4
(22) Date of filing: 22.12.2022
(51) Int. Cl.: B29C 33/30

(54) **MOLD ELEMENT SUPPORT DEVICE FOR A MANUFACTURING ASSEMBLY FOR PREFORM ELEMENTS AND/OR PRECAST ELEMENTS AND/OR PREPACKAGED ELEMENTS, MANUFACTURING ASSEMBLY, AND MANUFACTURING SYSTEM**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Mold element support device (2) for a manufacturing assembly (1) for preform elements (86) and/or precast elements and/or prepackaged elements, in particular for a wind turbine blade, the mold element support device (2) comprising multiple upper support portions (10) for carrying a longitudinal mold element (9, 9', 9", 9‴) for manufacturing a preform element (86) and/or a precast element and/or a prepackaged element, wherein the mold element support device (2) further comprises a longitudinal carrier element (3), in particular a carrier beam, for the longitudinal mold element (9, 9', 9'', 9‴) and a positioning device (6) having multiple pivotable, in particular horizontally extending, swivel arms (7, 7'), which are attached to the carrier element (3) at one end and have a respective support portion (10) attached thereto at the other end.

## Description

The invention concerns a mold element support device for a manufacturing assembly for preform elements and/or precast elements and/or prepackaged elements, in particular for a wind turbine blade, the mold element support device comprising multiple upper support portions for carrying a longitudinal mold element for manufacturing a preform element and/or a precast element and/or a prepackaged element. Further, the invention concerns a manufacturing assembly for preform elements and/or precast elements and/or prepackaged elements, in particular for a wind turbine blade, comprising such a mold element support device, and a manufacturing system.

Wind turbines usually comprise a rotor having multiple wind turbine blades. For example, such a wind turbine may convert the mechanical energy of the wind into electrical energy. Since large-scale energy production is sought, the wind turbines and, accordingly, the wind turbine blades have an enormous size, such that their manufacturing is a major challenge for manufacturers of wind turbines. While, for a long time, wind turbine blades have been fabricated from fiber-reinforced material involving the handling of large parts like fiber mats by casting the shell of the wind turbine blade, technologies have been proposed to facilitate manufacturing of wind turbine blades.

For example, it has been proposed to use preform elements, or preforms, respectively. Such preform elements are preformed smaller parts or segments of the wind turbine blade, which are used for building the respective wind turbine blade shell. The preform elements are prefabricated separately and then arranged and aligned in a blade mold according to the requested geometry of the wind turbine blade to be manufactured. The preform elements may be arranged in the blade mold for casting an entire wind turbine blade or a large wind turbine blade part.

The preform elements may comprise one or more components, for example one or more textile layers, wherein the components are at least locally attached to each other by using a binding agent/adhesive agent. Components of preform elements may, for example, comprise a plurality of fiber mats and/or core materials, which are locally attached to each other to allow for their mutual handling. This facilitates the arrangement of the components in the blade mold. Preform elements may be understood as semi-solid elements. In particular, textile components of the preform elements, for example fiber mats, may consist of glass fibers, carbon fibers, or aramid fibers. These layers remain unaffected by the binding agent, such that they can be filled later on with a resin during the manufacturing of the rotor blade. Core material may, for example, comprise balsa wood, foam and the like. Using preform elements in particular allows to reduce the cycle time for production of wind turbine blades.

As a variant, prepackaged elements have been proposed. Here, components like fiber mats and/or core material are placed in a mold element, assuming the shape of the molding surface. This shape is conserved by packing these components tightly in a vacuum bag.

In another approach, it has also been proposed to use precast elements, that is, parts of a wind turbine blade or wind turbine blade segments which already comprise cured resin and can also be used for building the wind turbine blade.

Preform elements may, for example, be fabricated in a manufacturing assembly, which may also comprise a preform mold. Such a manufacturing assembly usually comprises a mold element, for example a mold shell, which comprises a molding surface shaped according to the desired shape of the preform element, whereon the components are placed to assume the corresponding shape. Preferably, the preform elements are covered in a vacuum bag to stabilize the stack of components that constitutes the preform element.

In modern wind turbines, wind turbine blades of different geometries, in particular sizes, are employed. Hence, if different types/sizes of wind turbine blades are to be manufactured, the size of the preform elements varies in accordance with the blade dimensions they are intended to be used for. In particular, preform elements primarily vary in height and width, wherein, in addition, even in a certain type of wind turbine blade, different shapes may occur.

However, manufacturing assemblies for preform elements, in particular the preform molds, today are mostly designed for a certain preform element size and/or shape. In particular, preform elements of a given size and shape are manufactured in dedicated manufacturing assemblies for preform elements. This, however, is not a viable approach for mass production, since a very large number of manufacturing assemblies would be required as well as, in many cases, lifting and/or transport tools.

WO 2019/115 522 A1 proposes a method of manufacturing at least two preforms for molding a wind turbine blade, wherein the preform mold structure used has a molding surface of variable shape such that the shape of the molding surface can be varied at least between a first and a second configuration by using actuators. However, mold elements having a molding surface of variable shape are of a complex, expensive construction and in particular do not allow for scaling the shapes provided by such an adaptable mold element. In particular, such a mold structure could not provide molding surfaces for different widths and/or heights of preform elements to be manufactured.

Like problems arise for the manufacturing of prepackaged elements and precast elements.

It is an object of the current invention to provide an improved manufacturing setup allowing the production of a variety of preform elements and/or precast elements and/or prepackaged elements, in particular of different size and/or shape, that is flexible, cost-efficient and in particular also easily transportable.

This object is achieved by providing a mold element support device according to claim 1, a manufacturing assembly according to claim 14, and a manufacturing system according to claim 15. Advantageous embodiments are described by the dependent claims.

According to the invention, a mold element support device for a manufacturing assembly for preform elements and/or precast elements and/or prepackaged elements, in particular for a wind turbine blade, is provided, the mold element support device comprising multiple upper support portions for carrying a longitudinal mold element for manufacturing a preform element and/or a precast element and/or a prepackaged element. The mold element support device further comprises a longitudinal carrier element, in particular a carrier beam, for the longitudinal mold element, and a positioning device having multiple pivotable, in particular horizontally extending, swivel arms, which are attached to the carrier element at one end and have a respective support portion attached thereto at the other end.

Here, a mold element, in particular a mold shell, is a stiff, shape-keeping element having a molding surface shaped according to the desired shape of the preform element and/or precast element and/or prepackaged element, whereon, during manufacturing, the components are put to assume the corresponding shape. By adding a mold element, the mold element support device with the mold element supported thereon provides a preform mold (and/or precast mold and/or prepackaging mold) of a manufacturing assembly for preform elements and/or precast elements and/or prepackaged elements.

It is hence proposed to use a flexible mold element support device, which can be adapted for a plurality of different longitudinal mold elements, in particular mold elements having a different shape and/or size. The mold element support device comprises a plurality of swivel arms at least essentially horizontally extending from a main/central carrier element, preferably a carrier beam. Here, the cross section of the carrier element, in particular carrier beam, may be essentially the same over its length. The swivel arms may preferably be attached at the lateral sides of the carrier element. Each swivel arm carries at least one of the plurality of support portions, in particular exactly one. By being pivotable, the swivel arm as part of a positioning device for horizontally positioning the support portions allow to position the support portions at different distances to the carrier element in the width direction perpendicular to the longitudinal direction in which the carrier element extends. Preferably, the support portions of the swivel arms may support the mold element at its side edges, in particular along a lateral flange of the mold element, in particular mold shell.

Correctly supported on the mold element support device in a manufacturing assembly, the longitudinal directions of the longitudinal mold element and the longitudinal carrier element are the same. Hence, by being able to use the swivel arms of the positioning device to position the support portions at different locations in the width direction, the mold element support device can be adjusted to support mold elements of different widths. Preferably, the swivel arms can swing independently of each other to even allow adjustment to variable widths along the length of the mold element.

In especially preferred embodiments, the mold element support device further comprises height adjustment devices for each support portion, in particular arranged between the swivel arm and its support portion. The height adjustment devices allow to individually adjust the height of the support portions. For example, each height adjustment device may comprise a telescopic device. Here, the end of the swivel arm carrying the support portion may comprise a vertically extending aperture for receiving a height-adjustable rod, to which the support portion is attached. Generally, the height adjustment device may comprise a controllable, in particular electric and/or hydraulic actuator. The mold element support device may comprise operation elements, for example located at the swivel arms and/or the carrier element and/or provided as at least one remote control device. Preferably in addition to actuators for height adjustment, for at least one degree of freedom, the positioning device may also comprise actuators, which in particular can pivot at least one of the swivel arms, resulting in a different position in the width direction. Certain control processes may also be automated, for example by controlling actuators using a control device.

Hence, generally speaking, the height adjustment devices allow further flexibility of the mold element support device, since different heights of the support portions can be chosen. Additional adaptability regarding the size and/or shape of the mold elements and hence the preform elements and/or precast elements and/or prepackaged elements to be manufactured is provided. For example, flanges or other lateral edge regions of the mold element can be supported by the support portions of the swivel arms. Here, easy adjustment is possible to varying heights along the length of the mold element, for example due to special design features, which may, for example, be provided for lightning protection systems and the like. If, for example, the flange of a mold element is locally higher than along the rest of the length, a corresponding support portion may be adjusted to this larger height. As already discussed, accordingly, the positioning device may be used to adjust for locally larger or smaller widths. However, the height adjustment option provided can also be used to generally adjust the working height, in particular regarding additional tools or assistance devices during manufacturing. For example, the flange height may be adjusted to provide optimal working conditions for manufacturing personnel.

According to the invention, means are provided to implement a manufacturing assembly for preform elements and/or precast elements and/or prepackaged elements that is flexible regarding the size and/or shape of the preform elements and/or precast elements and/or prepackaged elements to be manufactured. In particular, mold elements for a large number of sizes and/or shapes of preform elements and/or precast elements and/or prepackaged elements can be provided to form a manufacturing system according to the invention. To produce another size and/or shape of preform elements and/or precast elements and/or prepackaged elements, the previous mold element can be removed, the mold element support device can be adjusted for supporting the new mold element, and the new mold element can be supported on the mold element support device. Adjustment is facilitated by providing the swivel arms as well as, preferably, the height adjustment devices. The support portions and swivel arms can be understood as easily "adjustable legs" that can, preferably, be adjusted individually in their height and the position of their support portion.

Hence, the manufacturing assembly, or work station, respectively, can handle mold elements with varying geometries. The manufacturing assembly is not specific for a certain wind turbine blade, in particular a certain size/dimension of a wind turbine blade. Hence, the manufacturing assembly can be used to make preform elements and/or precast elements and/or prepackaged elements for several different wind turbine blade types. To achieve this, multiple different mold elements may be provided.

As will be further detailed below, the mold element support device can be implemented as modular, such that it can, for example, be disassembled and tightly packed into a transport housing, for example a container. For example, the swivel arms can be positioned at least essentially parallel to the carrier element (like folded wings).

Generally speaking, manufacturing equipment can also be reused or even, if a blade type is discontinued, recycled for use with another wind turbine blade type. Hence, in addition to cost-efficiency, a quick transition to a new blade type manufacturing is possible. Since only the mold element is exchanged (and the mold element support device accordingly adjusted), the process of manufacturing preform elements and/or precast elements and/or prepackaged elements for wind turbine blades may be assimilated or even standardized for different types of wind turbine blades, making it easier for manufacturing personnel to switch between the production of different blade types. In particular, the manufacturing assembly may also be used for different types of wind turbine blade manufacturing. For example, the manufacturing assembly described herein may be used for integral blade manufacturing as well as blade half manufacturing. Finally, the manufacturing assembly can be used for both preform element/prepackaged element and precast element manufacturing.

In particular, a manufacturing system is disclosed, wherein at least one mold element support device may be combined with a plurality of mold elements of different size and/or shape, which can all be used with the mold element support device to build a manufacturing assembly for certain different types, in particular sizes, of preform elements and/or precast elements and/or prepackaged elements. In particular, each such manufacturing assembly can be able to manufacture preform elements, for example concave preform elements, which may be packed in vacuum bags and/or vacuum foils. In particular, it may even be possible to pack more than one preform element and/or precast element and/or prepackaged element on top of each other during manufacturing. Regarding vacuum bags, different types and designs can be employed, for example like described in post-published European patent application 21209596.2.

In embodiments, the swivel arms may be attached to the carrier element by attachment means, wherein a pair of two associated swivel arms extending to different sides of the carrier element may be attached by at least one of the attachment means, that is, a shared attachment means. Swivel arms can hence be provided as pairs, one swivel arm being pivotable at each side of the carrier element such that, in particular, different lateral distances in the width direction can be adjusted between the respective support portions. In particular, a required width can be adjusted by symmetrically pivoting the swivel arms, allowing symmetric positioning of the support portions with respect to the carrier element and hence robust and stable support of the mold element.

Additionally or alternatively, the attachment means, as part of the positioning device, may be releasable. That is, swivel arms or pairs of swivel arms may be mounted at different positions along the length of the carrier element, providing further flexibility. For example, the mold element support device can be adjusted to different lengths of the mold element by respectively placing or even removing swivel arms along the length of the carrier element, in particular carrier beam.

Preferably, the positioning device may comprise sliding elements of the attachment means slidable on the carrier element, in particular the carrier beam, when the attachment means is at least partly released. Hence, for example, the carrier element, which preferably is a carrier beam, can be understood as a rail on which the swivel arms are guided on the attachment means. In a concrete embodiment, the attachment means may comprise lateral plates and at least on top plate. In particular, lateral plates may each comprise a shoulder resting on a lower surface of the carrier element and/or the attachment means may also comprise a bottom plate. The lateral plates may be fastened to the top plate and optionally bottom plate by screws and/or bolts. Partly loosening the screws and/or bolts allows to slide the sliding element, comprising the lateral plates and the top plate, optionally also the bottom plate, along the carrier element. For example, the cross sectional shape of the carrier element, in particular carrier beam, along its length may be constant in this embodiment, for example quadratic and/or rectangular. Also generally, the swivel arms may be attached to the lateral plates by hinges.

Such an attachment means slidable on the carrier element if at least partly released/loosened may, of course, also be applied to other components of the mold element support device, in particular wheels and/or support legs to be discussed below.

In embodiments, the positioning device may further comprise a length adjusting means for the swivel arms and/or exchangeable swivel arms of different lengths. For example, such a length adjusting means may comprise a telescopic means. In a case in which the mold elements have a width where the swivel arms cannot reach, it is possible to exchange the swivel arms with correspondingly longer swivel arms and/or use swivel arms having an adjustable length, for example, a telescopic arrangement.

Preferably, the mold element support device may further comprise at least one column element having a support portion thereon and extending in a vertical direction (height direction), which is supported, in particular slidable in the longitudinal direction, on the carrier element. In this manner, the at least one column element can be positioned in the width direction between two lateral support portions carried by swivel arms, in particular a pair of swivel arms as discussed above, and/or support a middle section of the mold element in the width direction. Such column elements having an additional support portion may be provided to prevent deflection and/or deformation of the mold element by locating the column element in the middle section below the mold element to provide additional support. In particular, if the mold element is symmetrically curved, the column elements may support the mold element at the lowermost point if the support portions of the swivel arms are arranged symmetrically around the carrier element and support flanges or other edge regions of the mold elements. It is, however, also conceivable to dedicatedly chose asymmetric positioning of support portions on swivel arms such that the lowest portion of the not symmetrically curved mold element is positioned above the carrier element, supportable by the at least one column element.

For supporting the column element on the carrier element, in particular the carrier beam, a simple holder adapted to the shape of the carrier element may be sufficient, in particular extending at least partly over lateral surfaces of the carrier element. In this manner, the at least one column element may be understood as being attached by gravity. However, fixing means to fix the position of the holder can be provided. It can easily be added when required and positioned along the length of the carrier element.

In advantageous embodiments, wheels and/or support legs for supporting the carrier element on the floor are provided. In the case of wheels, a locking device, in particular a brake, may be additionally associated with the wheels. However, it is also conceivable to have support legs in addition to the wheels and to lower the wheels to a position below the feet of the support legs to be able to move the carrier element and hence the whole mold element support device. In particular, even a whole manufacturing assembly, that is the mold element support device with a mold element placed on it, may be moved, in particular with at least one preform element and/or precast element and/or prepackaged element or at least its components positioned in the mold element. For example, after the components of a preform element are packed in the mold element, the at least one preform element on the mold element, which is in turn supported by the mold element support device, may be moved to a heating and/or cooling device, in particular an oven. Here, the preform element can be transported into the heating and/or cooling device by a corresponding manipulation device and/or the mold element on the mold element support device can be moved directly into the heating and/or cooling device. In the latter case, after the heat or cold treatment is finished, the preform elements can be moved to the next process step, for example at the demolding station and/or unpacking station and/or a blade mold. If heating and/or cooling are performed directly at the preform mold comprising the mold element support device and the mold element, the preform element or multiple preform elements located in the mold element can also be directly moved to some other further process step.

It is noted that the mold element support device may also be moved to an exchange location where a different mold element, in particular a mold element of different size, may be fitted to it after the previous mold element has been removed. This allows the various mold elements to be interchanged at a central location with specialized handling equipment for this operation. Instead of this central procedure, replacement of mold elements may also take place at individual mold stations.

Regarding movement of the mold element support device, in preferred embodiments, a tow coupling may be provided attached to the carrier element, in particular at at least one longitudinal end of the carrier element. Such a tow coupling may, for example, comprise a tail or the like which is hingedly attached to the carrier element and can be coupled to a towing vehicle to pull and/or push the mold element support device to another location.

Preferably, the support portion may comprise an, in particular flat, contact surface for contacting the mold element, and a tilting device, in particular a ball joint, for tilting the contact surface into different contact orientations. Mold elements may have differing flange designs or, generally, edge designs. Additionally, support portions may be used where the mold element generally has a surface which is tilted out of the horizontal plane. In all those cases, preferably, additional degrees of freedom can be provided for the support portion by providing a tilting device allowing tilting of the contact surface out of the horizontal plane to adjust to the orientation of the mold element where it is to be engaged. For example, the flange of the mold element may comprise an oblique mold surface bounded by an edge shoulder. In such an embodiment, the support portion, in particular the contact surface, may be placed adjacent to the edge shoulder in an orientation corresponding to the oblique mold surface. Preferably, the tilting device may comprise a ball joint to, in particular, allow tilting/pivoting around a rotation axis extending in the longitudinal direction independent of the pivot angle of the swivel arm.

In embodiments, the support portion may also comprise a low friction material and/or rollers in a contact area to the mold element. Having a low friction material, in particular on the already mentioned contact surface, allows easy addition and removal of mold elements, for example if the mold element is to be slid upon or slid from the contact surface in the contact area. Rollers, which may preferably be adjustable in their rolling direction due to the swivel arms, allow to achieve similar advantages.

The mold element support device may further comprise at least one longitudinal working platform for manufacturing personnel. Such a working platform is to be placed longitudinally along the mold element. In this manner, a flexible walkway for manufacturing personnel along the mold element/preform mold is provided.

In preferred embodiments, the mold support device may further comprise a height adjustment means, in particular a telescopic means and/or scissors mechanism, for the working platform. In this manner, the height of the working platform can be adjusted to fit the height of the mold element, such that an optimal working position for manufacturing personnel can be achieved. In particular, an operator can reach directly or indirectly the molding surface. As the height adjustment means for the working platform, for example, the scissors mechanism can be provided. Of course, other implementations can also be used, such as, for example, telescopic means.

Generally speaking, working platforms may be provided on each side of the mold element. These working platforms may be independently adjustable in height. The working platforms may further comprise a climbing means, for example, a pivotingly hinged ladder or stairs.

In embodiments the carrier element may comprise different module sections along the longitudinal direction, wherein the module sections are releasably attached to each other by coupling means. For example, in case of a carrier beam, the carrier element may be divided into several longitudinal module sections which have flanges at least at their ends connectable to another module section. By means of the flanges, the module sections can be bolted or screwed together. For example, a carrier element may be divided into the following module sections, namely a head and/or a tail module, and/or an intermediate module. If components can be releasably attached or mounted to the carrier element, they may also form additional modules, for example at least one wheel module, at least one swivel arm module, at least one support leg module and/or combinations of such modules. Such modularity allows, as a first advantage, to adjust the number of individual modules employed as needed, in particular regarding the length of the mold element. Furthermore, service is facilitated as individual modules can be replaced when they are in need of service or have a defect. A modular mold element support device can easily be assembled and disassembled and tightly packed, for example in a container.

A manufacturing assembly for preform elements and/or precast elements and/or prepackaged elements according the invention comprises a mold element support device according to the invention and a mold element supported on the mold element support device, hence providing a complete preform mold (or precast mold/prepackaging mold, respectively). All features and advantages discussed regarding the mold element support device can analogously be applied to the manufacturing assembly. In particular, the manufacturing assembly can be part of a manufacturing system comprising different, exchangeable mold elements, in particular mold elements of different size and/or different shape.

Here, the mold element, in particular mold shell, can be constructed/manufactured as already proposed in the art or employ alternative, novel designs. For example, the mold element may comprise a classical laminate, which is relatively heavy and expensive, but suitable since it allows heat transport through the layers of the laminate, for example for heating and/or cooling the binding agent of a preform element. In other embodiments, a sandwich structure of the core may be provided, for example comprising fiber glass layers on both sides of a core element, which may be made of a core material like balsa wood or foam. Such a construction is cheap, strong and relatively light in weight, however, does not provide ideal heat transfer through the mold element. Such a sandwich structure can be made even lighter in weight if carbon fiber layers are combined with a core material based on foam. However, such a construction may be more expensive due to the use of carbon.

In another embodiment, the sandwich structure may be modified to include at least one layer providing internal channels and/or voids. For example, such an additional layer may be placed on a laminate stack such that the laminate stack and the additional layer can be enclosed between outer layers, for example made of fiber glass. For example, the additional layer may be a ParaBeam^{™} layer. Such internal channels and/or voids in the mold element can advantageously be used to heat and/or cool the preform element and/or precast element and/or prepackaged element from below, in particular by supplying a cooling or heating fluid to the internal channels and/or voids.

Such internal channels can also be provided in a 3D-printed construction of the mold element. Here, the internal channels may also be used to provide cooling or heating to the preform element and/or precast element and/or prepackaged element from below.

In another embodiment, it is also conceivable to provide a mold element which is constructed of a honeycomb-based core material sandwiched between outer layers comprising carbon fibers, to further reduce the weight of the mold element.

Generally, the manufacturing assembly may additionally comprise at least one assistance device providing at least one component for the preform element and/or precast element and/or prepackaged element to manufacturing personnel. For example, the at least one assistance device may provide fiber mats and/or fiber material and/or core material and/or binding agent. For example, components, in particular fiber mats, can be provided on a pallet hanging from a gantry crane or overhang crane which may be oriented in the width direction or in the longitudinal direction. Here, preferably, the height of the pallet suspended from the crane can be adjusted so that the components, in particular the fiber mats, can easily be reached for the manufacturing personnel, in particular from both sides of the mold and/or on the working platform. It is noted that, if working platforms that are height adjustable are provided, these may be adapted to be in an optimal position for working, in particular also depending on the size of the operator. Regarding longitudinally oriented overhang cranes or gantry cranes, it is noted that these may be moved between parallelly oriented and positioned manufacturing assemblies to provide components to multiple manufacturing locations. However, the or an assistance device can also be a fiber laying machine, which can be CNC-controlled and comprise a cutting device cutting fiber material to a required length while laying it directly into the preform mold. A fiber material stock can be placed near the manufacturing assembly so that the fiber laying machine can be loaded separately or continuously.

It may be noted that such an assistance device can also be configured to directly apply the binding agent to the component, for example fiber mats, as has already been proposed in the art.

In the current invention, the mold element can be exchanged so that preform elements and/or precast elements and/or prepackaged elements of a different geometry, in particular different shape and/or size, can be manufactured. Here, several ways to exchange mold elements are conceivable. For example, a transport and/or storage device, which may be part of the manufacturing assembly and/or manufacturing system, for mold elements may be moved to the mold element support device, wherein lifting devices, for example comprising a lifting crane and/or using vacuum lifters, can be employed to move mold elements. For example, using the lifting device, one mold element previously used can be lifted from the support portions of the mold element support device and placed in a storing position and/or transport position on the transport and/or storing device. Then, another mold element can be lifted using the lifting device and moved onto the mold element support device, after it has been adjusted to the new mold element, in particular by using the height adjustment devices and/or the positioning device.

Here, a vacuum lifter comprising a rotatable lifting yoke is particularly preferable if the mold elements are transported and/or stored in an upright position. Using a vacuum lifter with a rotatable yoke, the horizontally oriented mold element can, after lifting from the mold element support device, be rotated into an upright, vertically oriented position and be lowered into the storage and/or transport position on the storage and/or transport device, or magazine, respectively.

In another approach, the mold elements may also be stored or transported in a horizontal position, such that they can, for example, simply be slid to and/or from the mold element support device when the transport and/or storage device is positioned at one longitudinal end of the mold element support device. In another embodiment, the transport and/or storage device may be moved over the mold element, gripping it from below and lifting it from the support portions to a transport and/or storage position.

Preferably, in such an embodiment, the transport and/or storage device may be a rack comprising a frame structure, which may be movable on wheels. Guided in or on vertical beams of the frame structure are support elements which may be height adjustable by moving the support elements in or on the vertical beams. In this manner, for example, once a mold element is supported on the support elements of the transport and/or storage device it can, for example, be lifted upwards, providing room for receiving another mold element on support elements being placed below the already used group of support elements. Of course, such room can also be provided by moving an already received mold element downwards and use a higher placed group of storage elements to receive another mold element. If a mold element is to be unloaded, it can, in the same manner, be positioned at the correct unloading height and be unloaded from the respective group of support elements of the transport and/or storage device.

Preferably, in any case, the transport and/or storage device can also be adapted to flexibly handle different geometries of mold elements. For example, support elements of the transport and/or storage device may comprise swivel arms, as already discussed above. To provide height adjustability of the support elements, the vertical beams may comprise rails in or on which the support elements can be mounted to be moved up and down, in particular also individually, in particular within a group. Alternatively, clamps which may be loosened and moved may be used. If swivel arms are used, different widths of mold elements can be handled; individual height adjustability allows to handle mold elements having different heights at different sides.

It is noted that such transport and/or storage devices may also be used to transport and/or store preform elements and/or precast elements and/or prepackaged elements manufactured using the manufacturing assembly.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a perspective schematical view of a manufacturing assembly using a first embodiment of a mold element support device,
- Fig. 2: an illustration showing adjustment to different width in the embodiment of fig. 1,
- Fig. 3: an illustration showing replacement of swivel arms in the embodiment of fig. 1,
- Fig. 4: a part of a second embodiment of a mold element support device in a transport state,
- Fig. 5: a partial view of a manufacturing assembly with a third embodiment of a mold element support device,
- Fig. 6: a modularized third embodiment of a mold element support device,
- Fig. 7: an explosive view of the support portions,
- Fig. 8 -10: a support portion interacting with different flange designs of a mold element,
- Fig. 11: a possible design of a support portion,
- Fig. 12: a manufacturing assembly having workstation platforms,
- Fig. 13: the manufacturing assembly of fig. 12 with a first assistance device,
- Fig. 14: the manufacturing assembly of fig. 12 with a second assistance device,
- Fig. 15: the manufacturing assembly of fig. 12 with a third assistance device,
- Fig. 16: the manufacturing assembly of fig. 12 with a fourth assistance device,
- Fig. 17: the manufacturing assembly of fig. 12 with a fifth assistance device,
- Fig. 18: a first embodiment of a layer structure of a mold element,
- Fig. 19: a second embodiment of a layer structure of a mold element,
- Fig. 20: a third embodiment of a layer structure of a mold element,
- Fig. 21: a fourth embodiment of a layer structure of a mold element,
- Fig. 22: a fifth embodiment of a layer structure of a mold element,
- Fig. 23: a sixth embodiment of a layer structure of a mold element,
- Fig. 24: a view showing a transport and/or storage device for mold elements and a lifting means,
- Fig. 25: a second view showing a transport and/or storage device with a vacuum lifter as lifting means,
- Fig. 26: a view showing the placement of a mold element onto a mold element support device using a vacuum lifter,
- Fig. 27: a view showing a second embodiment of transport and/or storage device and lifting means to place a mold element onto a mold element support device,
- Fig. 28: placing a mold element onto a mold element support device by moving the second embodiment of the transport and/or storage device over the mold element support device,
- Fig. 29: a perspective view of the second embodiment of the transport and/or storage device,
- Fig. 30: a cut view of the second embodiment of the transport and/or storage device in a first state,
- Fig. 31: a cut view of the second embodiment of the transport and/or storage device in a second state,
- Fig. 32: a view showing removal of a preform element from the mold element, and
- Fig. 33: a view showing usage of the second transport and/or storage device for removing a preform element.

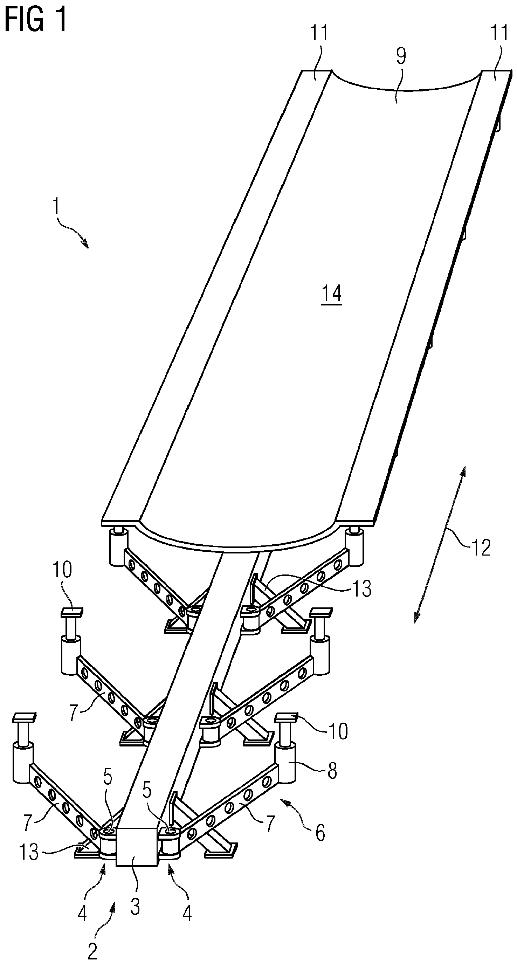

Fig. 1 schematically shows a manufacturing assembly 1 comprising a first embodiment of a mold element support device 2. The mold element support device 2 comprises a carrier element 3, in this case a carrier beam, to which, using attachment means 4 comprising hinges 5, swivel arms 7 as part of a positioning device 6 are pivotably attached at one end. At the other end, via a height adjustment device 8, in this case a telescopic device, support portions 10 for supporting a mold element 9, which has respective flanges 11, are mounted. For reasons of better illustration, the mold element 9 is shown in a shifted position along a longitudinal direction 12 to provide a better view regarding the mold element support device 2. In the shown first embodiment, the carrier element 3 further comprises support legs 13 for supporting the mold element support device 2 on a floor. For example, the carrier element 3 may be releasably mountable to the floor.

To manufacture a preform element using the manufacturing assembly 1, in the embodiments shown here a preform element for a wind turbine blade, the components of the preform element, for example comprising fiber mats, core materials and/or binding agents, are placed in the mold element 9 having a molding surface 14 defining a shape desired for the preform element. By placing the components on the molding surface 14, they assume the desired shape. The binding agent is supplied to locally attach the components together such that they can be handled as a single object, that is, the preform element. As will be further discussed later on, the binding agent may be activated by heat and hardened/cured by cooling, which can also already take place in the manufacturing assembly 1. Alternatively, an oven or other heating and/or cooling device may be used. In many embodiments, the preform elements will be packed in a vacuum bag and/or vacuum foil for improved handling. A work station provided by the manufacturing assembly 1 may thus also be called packing station.

While, in these embodiments, manufacturing assemblies 1 for preform elements for wind turbine blades are described, embodiments of the invention may also relate to other preform elements and/or precast elements and/or prepackaged elements.

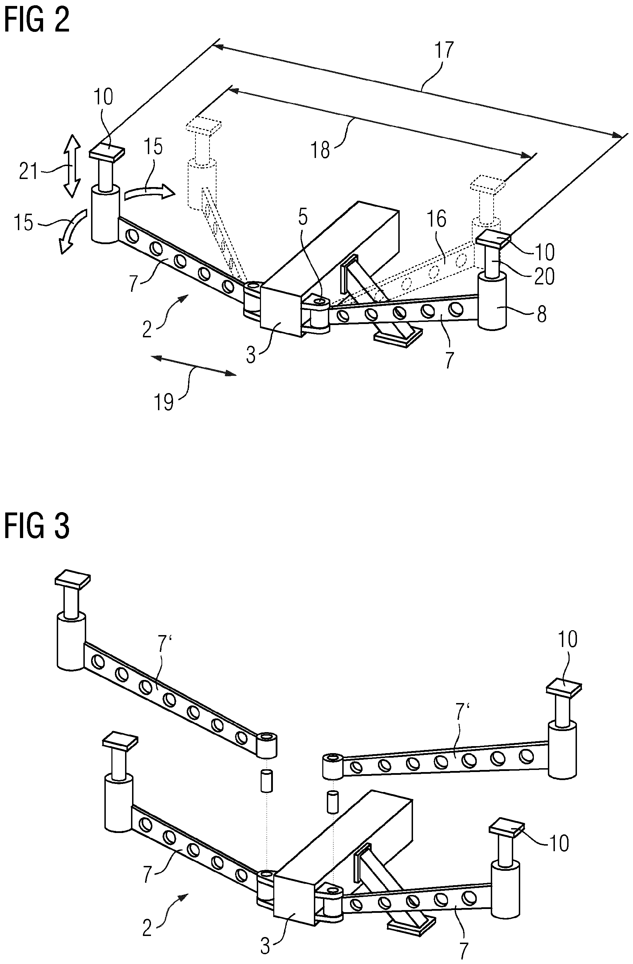

As can be seen in fig. 1, the mold element 9 has a certain width, or generally, size and/or shape. In a manufacturing system, different mold elements 9 having different sizes and/or shapes may be provided to be interchangeably used on the mold element support device 2. To be adjustable to these different mold elements 9, several degrees of freedom may be provided as further shown with respect to fig. 2.

As already explained, the swivel arms 7 are pivotably attached to the carrier element 3 by hinges 5, as also indicated by arrows 15. Hence, by pivoting the swivel arms 7 into a different position, like, for example, the dashed position 16 of fig. 2, different distances 17, 18 in the width direction (perpendicular to the longitudinal direction 12) can be chosen. Additionally, the height adjustment devices 8, in this embodiment comprising a rod 20 slidably received in an aperture at the end of the swivel arm 7, the heights of the support elements can also be adjusted in the height direction 21.

The support portions 10 may be individually adjustable by the height adjustment devices 8 in the height direction 21, for example to account for a varying height of a flange or other side edge of mold elements 9, for example regarding special features required in the preform element. Such features may, for example, relate to lightening protection systems and provide locally varying widths and/or heights.

As shown schematically in fig. 3, it is also possible to adapt the mold element support device 2 to support even wider mold elements 9 by exchanging the swivel arm 7 with longer swivel arms 7'.

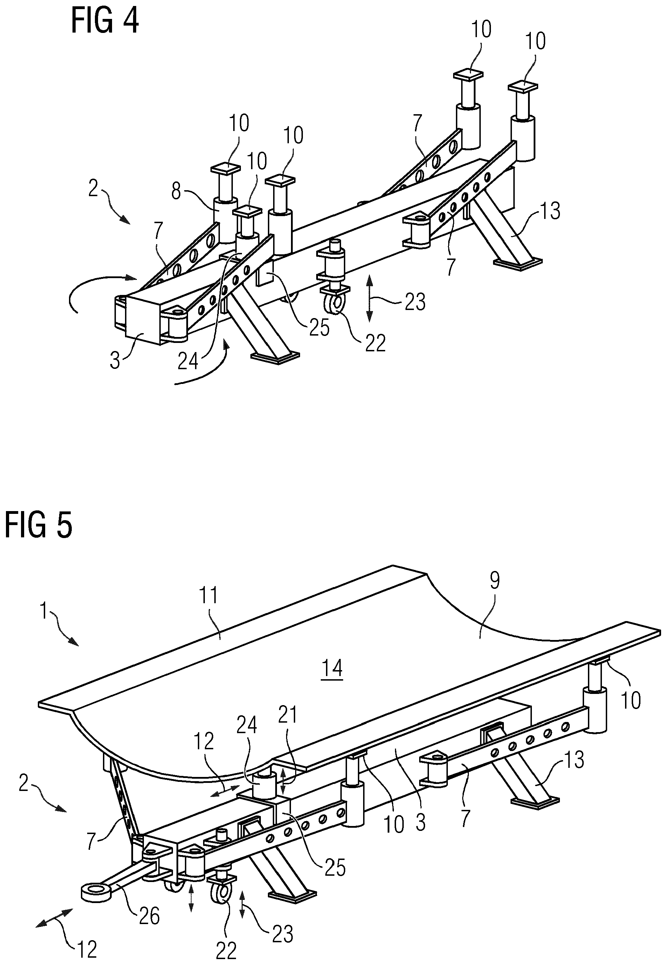

Fig. 4 partly illustrates a second embodiment of a mold element support device 2 again having a carrier element 3 in form of a carrier beam and pivotably attached swivel arms having support portions 10 at their other end, which, again are height-adjustable by a height adjustment device 8, as in all shown embodiments. Also as provided in all the embodiments shown here, the swivel arms 7 are pairwise attached along the length of the carrier element 3 at opposing lateral sides of the carrier element 3.

The carrier element 3, in this case, also has wheels 22 attached to it, which can be lowered such that the support legs 13 no longer contact the floor, as indicated by double arrow 23. In this manner, the whole mold element support device 2 can be easily moved. Such wheels 22 may also be provided in other embodiments where they are not shown.

Furthermore, a height-adjustable column element 24 extending vertically and also having a support portion on its upper end is shown placed on the carrier element 3 by a holder 25 to further support a mold element 9 in a middle section, as will be discussed below.

In Fig. 4, the mold element support device 2 is shown in a tight, less space-consuming transport state with folded up swivel arms 7.

Fig. 5 shows a further embodiment in a partial view, in this case again a complete manufacturing assembly 1 having a mold element 9 supported with its flanges 11 on the support portions 10. Here, it can be seen that the column element 24 can be positioned at the lowest point of the mold element 9 for further support, in particular if the mold element 9 is symmetric. As explained, it can be adjusted in the height direction 21. Since it is simply positioned on the carrier element 3 using the holder 25, it can also be moved in the longitudinal direction, for example to position between the support portions 10 of a pair of swivel arms 7.

In addition to fig. 4, at at least one longitudinal end of the carrier element 3, a tow coupling 26 is additionally provided, which may be hingedly attached to the carrier element 3. For example, a towing vehicle can be coupled via the tow coupling 26 to easily move the mold element support device 2 when the wheels extend below the support legs 13. Further wheels 22 are, of course, provided along the length of the carrier element 3. It is noted that, in embodiments having wheels 22 and, in particular also a tow coupling 26, even the whole manufacturing assembly 1, in particular also with a preform element on it, can easily be moved, for example to a heating and/or cooling device, in particular an oven, or another station where a process step is performed, for example to an unpacking station and/or a blade mold.

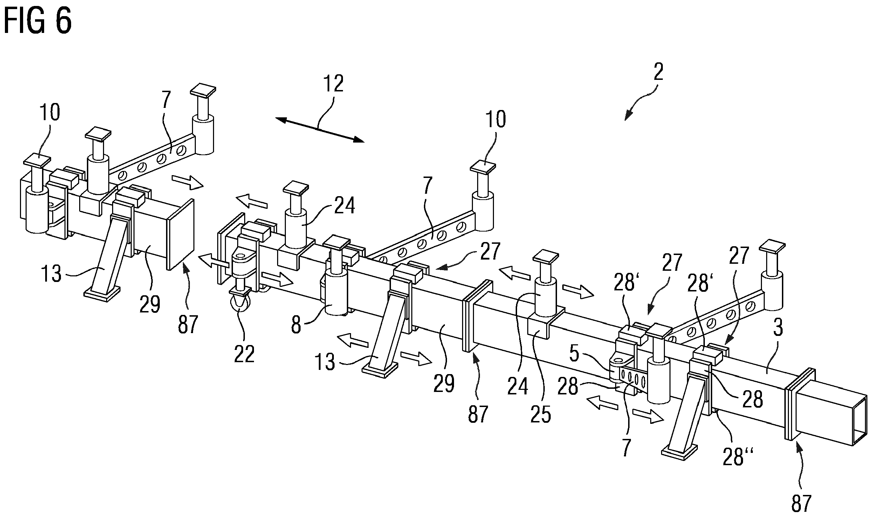

It is noted that the holder 25, of course, may also comprise fixing means, as for example indicated in fig. 6.

Before proceeding to the embodiment of fig. 6, it is noted that also in the previous embodiments of the mold element support device 2, at least the swivel arms 7, but also other components like the support legs 13 or a wheel unit with the wheels 22 may be releasably attached to the carrier element 3 using attachment means 4. This is further illustrated in fig. 6, where each attachment means 4, 27 comprises lateral plates 28 as well as a top plate 28' and a bottom plate 28''. If the screws shown are loosened, the attachment means 4, 27 and hence the attached component, in particular the swivel arms 7, can be easily moved in the longitudinal direction 12, as indicated by the arrows. The plates 28, 28', 28'' form a sliding element. Hence, further flexibility is provided. For transport or tight packing of the mold element support device 2, for example into a container, they may even be completely detached.

In this regard, fig. 6 also illustrates a further feature regarding the carrier element 3, which may also be implemented in all embodiments. Here, the carrier element 3 is divided in multiple module sections 29 which can be releasably attached together using a flange connection 87. As can also be seen in fig. 6, the carrier element 3 may simply and light-weight be made from a hollow profile, in particular of a rectangular section.

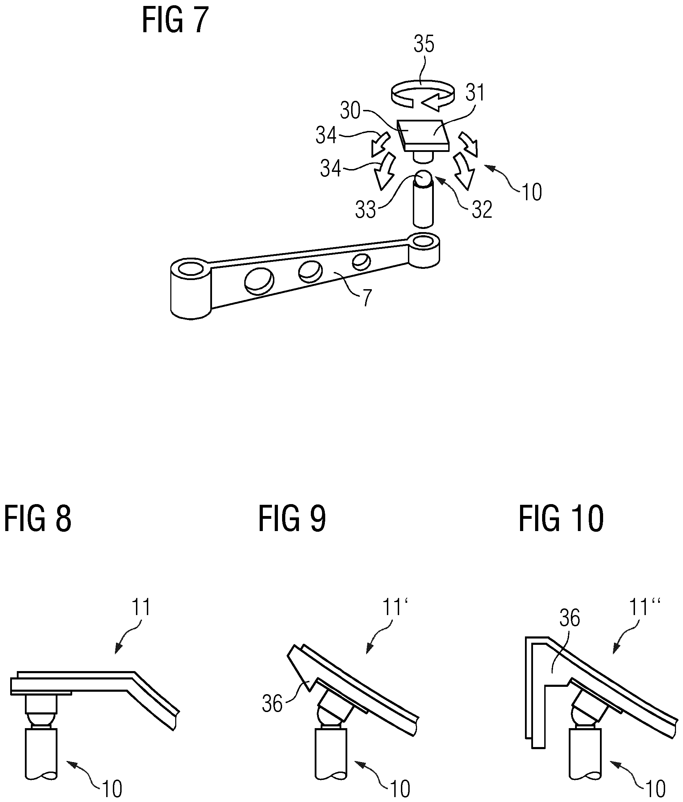

In the exploded view of fig. 7, the design of the support portion 10 is shown in more detail, as applicable to all embodiments. As can be seen, the support portion 10 comprises a contact area 30, in this case a flat contact surface 31, for contacting the mold elements 9. A tilting device 32 is constituted by a ball joint 33, such that the contact surface 31 can be tilted from its horizontal position into a plurality of tilted orientations, as indicated by the arrows 34. The ball joint 33 or, in general, the tilting device 32, may also allow rotation of the contact area 30/contact surface 31, as indicated by arrow 35, in particular to compensate the angling due to the pivoting swivel arm.

This design allows adjustability of the contact surface 31 and hence the whole support portion 10 to different designs of the flanges of mold elements 9, as further illustrated in figures 8 to 10. Here, different configurations of flanges 11, 11' and 11'' are shown requiring tilting of the contact surface 31 by the tilting device 32. In particular, in figures 9 and 10, flanges 11' and 11‴ are shown having a shoulder 36 against which the contact area 30 of the support portion 10 may rest.

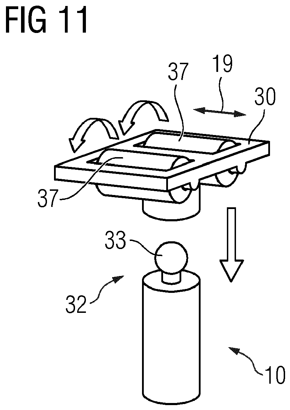

The contact surface 31/contact area 30 may comprise a low friction material, in particular to allow sliding of the mold elements 9 on the contact surface 31. In another embodiment, the contact area 30, as shown in fig. 11, may comprise rollers 37, preferably oriented in width direction 4, to facilitate placement of the mold elements 9, 9', 9" on the support portion 10 of the mold element support device 2.

The features discussed with respect to figures 7 to 11 are applicable to all embodiments of the mold element support device 2 according to the invention.

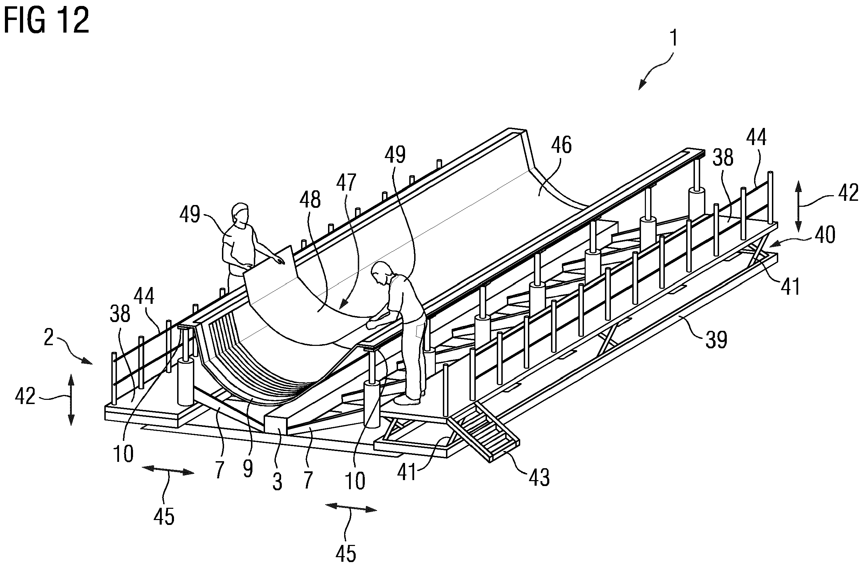

Fig. 12 illustrates a further embodiment of a mold element support device 2 of a manufacturing assembly 1 during use. This fourth embodiment can be based on any of the previous embodiments and additionally comprises working platforms 38 extending longitudinally along both sides of the mold element 9. Both working platforms 38 are provided on top of a frame 39, which comprises height adjustment means 40, in this case a scissors mechanism 41, for the working platform 38. Hence, the working platform 38 is also height adjustable, as indicated by double arrow 42. A climbing means 43, in particular a stair or a ladder, is pivotably mounted to the working platform 38, which may further comprise a security fence 44.

The frame 39 may be movable to be positioned as close necessary to the mold element 9. The movability of the working platforms 38 in the width direction 19 are indicated by arrows 45.

The mold element support device 2, in this manner, not only allows to adjust to different mold elements 9, but also to find an optimal working position regarding the width direction 19 and the height direction 21.

In fig. 12, a manufacturing step for a preform element is exemplarily illustrated. A vacuum foil 46 or other component of a vacuum bag has already been placed in the mold element 9. Components 47 of the preform element, in this case fiber mats 48, are currently added by manufacturing personnel 49.

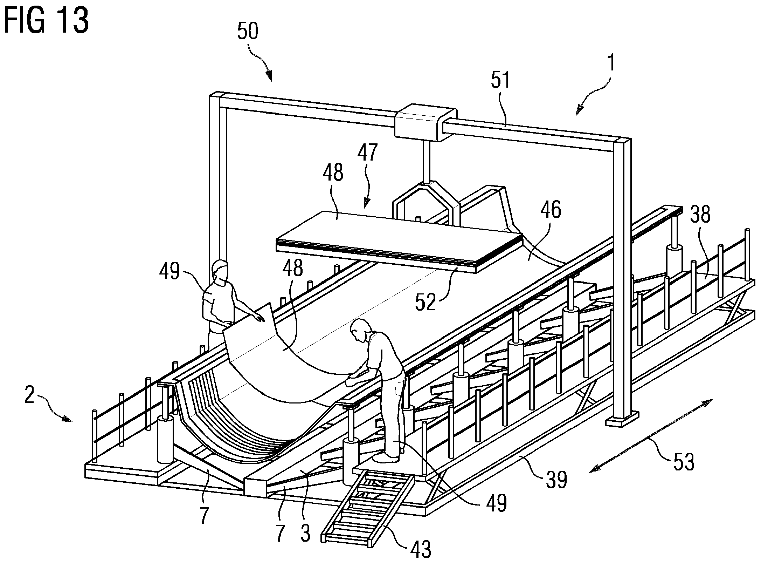

Fig. 13 shows a further example, in particular a fifth embodiment of the mold element support device 2, which may also be on any of the previous embodiments. Fig. 13 again shows two longitudinally extending working platforms 38 along the mold element 9. Here, the manufacturing assembly 1 additionally comprises an assistance device 50 for providing components 47, in this case fiber mats 48. The assistance device 50 comprises an overhang crane 51 having a pallet 52 on which the fiber mats 48 are provided. The assistance device 50 may be movable according to arrow 53 such that the manufacturing personnel 49 can easily access the fiber mats 48 on the pallet 52. If the height of the pallet 52 is not or only in a limited fashion height-adjustable, the height of the support platforms 10 as well as the working platforms 38 can be adjusted to achieve optimal working conditions. Hence, the flexibility of the mold element support device 2 also applies to assistance devices 50.

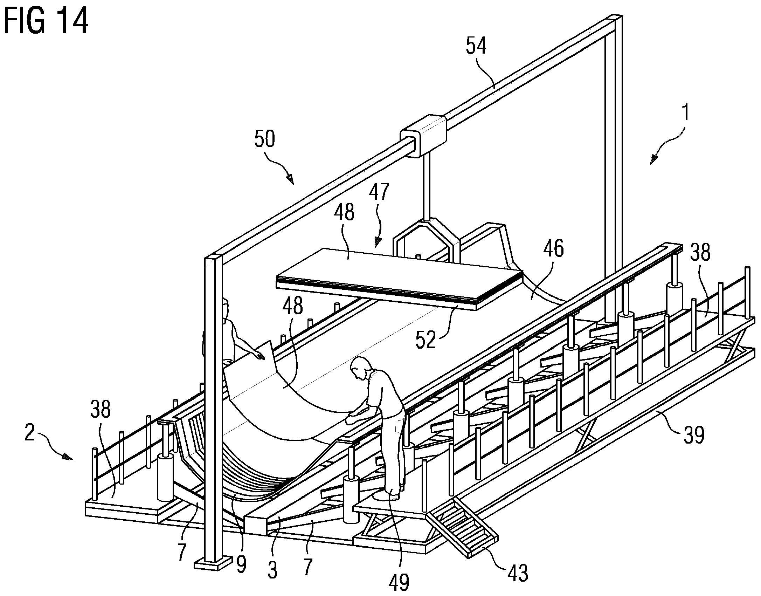

While the overhang crane 51 in fig. 13 is a transversal crane in the width direction 19, fig. 14 shows an additional embodiment of a manufacturing assembly using an overhang crane 54 which is longitudinally oriented and can, for example, be movable in the width direction 19 to be used at parallelly extending manufacturing assemblies 1/mold elements 9.

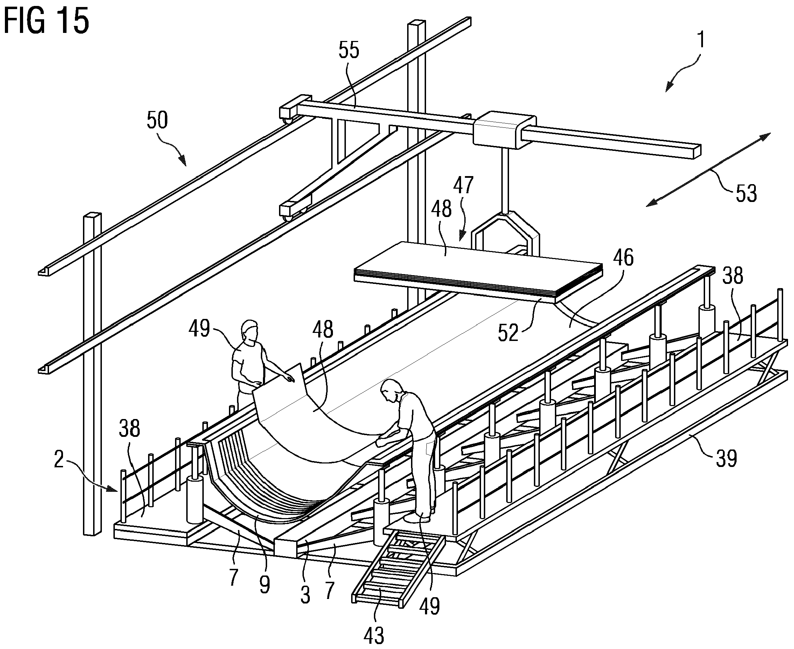

In the example of fig. 15, instead of an overhang crane, a gantry crane 55 is provided.

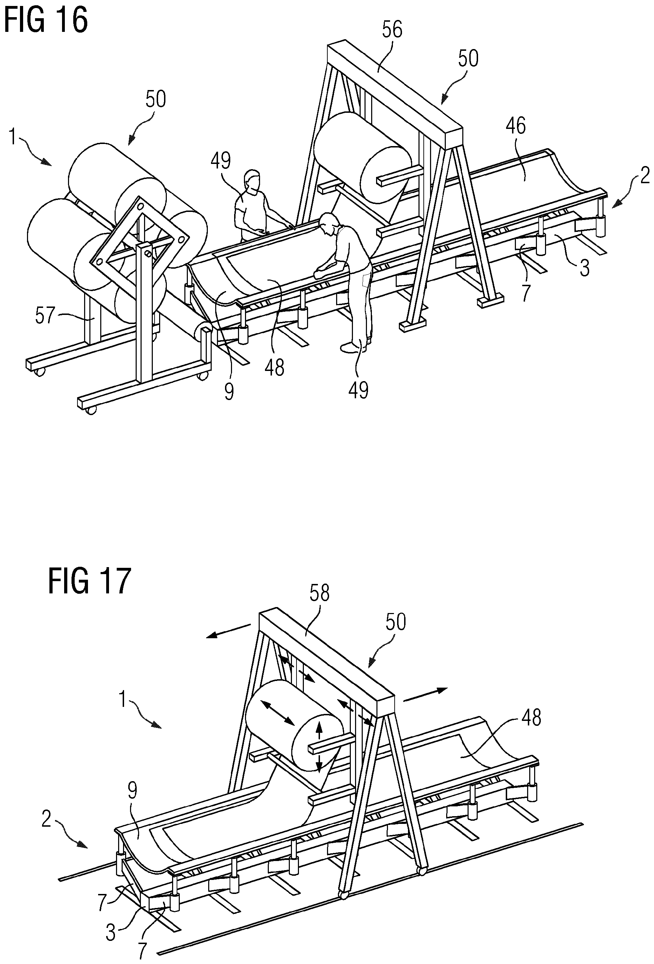

In the example of fig. 16, no working platforms 38 are used, which may, in other embodiments, be provided nonetheless. In this case, a fiber laying machine 56 is used as assistance device 50, the fiber laying machine 56 comprising a cutter cutting the fiber mat 48 in the current length while laying it directly into the mold element 9, in particular onto the mold surface 14 already provided with the vacuum foil 46. A fiber material stock 57 can be placed near the mold element 9 so that the fiber laying machine 56 can be loaded separately or continuously.

Fig. 17 illustrates a further example, wherein a CNC-controlled fiber laying machine 58 is used so that the fiber material/fiber mat 48 is correctly positioned on the molding surface 14.

In particular in embodiments where a fiber laying machine 56, 58 is used, but also in other embodiments and with other assistance devices 50, the binding agent may be directly applied to the fiber mats 48.

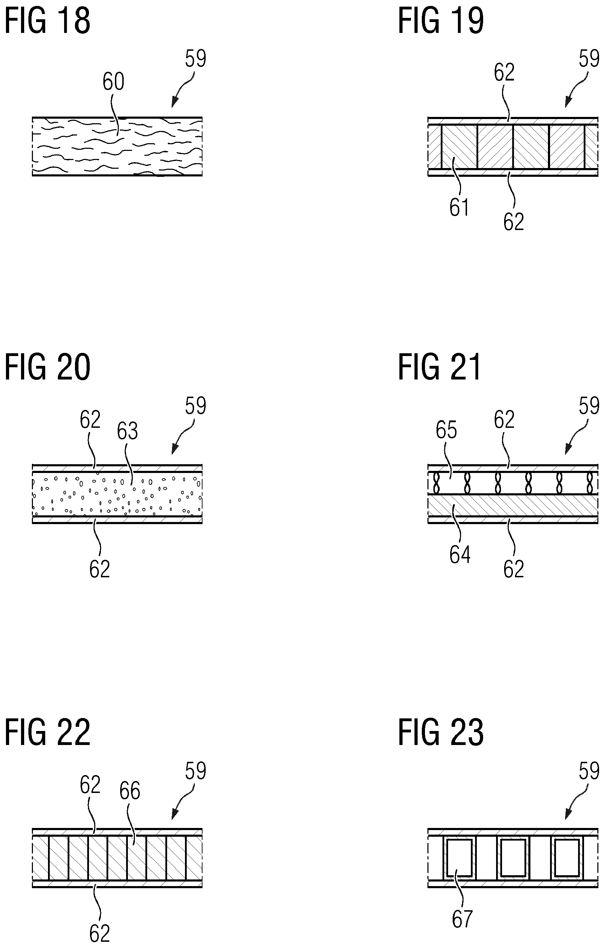

The mold elements 9 may generally be made, or constructed, respectively, from a layer structure. Here, fig. 18 shows a first embodiment of a layer structure 59 of a mold element 9. Here, a classical laminate 60 is used, which is relatively heavy and expensive, but allows heat transport through the layers of the laminate 60, such that heating or cooling through the mold element 9 is possible. In the second embodiment of a layer structure 59 shown in fig. 19, a sandwich structure is used, in which a core material 61, in this case balsa wood, is sandwiched between outer layers 62 made of fiber glass. This is a cheap, strong and relatively light in weight variant, but provides less heat transfer through the layer structure 59.

In the third embodiment of a layer structure 59 of fig. 20, an especially lightweight sandwich structure is used, where the core material 63 is a foam and the outer layers 62 are again based on carbon fibers.

In the especially advantageous fourth embodiment of fig. 21, two core materials are sandwiched between the outer layers 62 in the layer structure 59, namely a first core layer 64, which may be a laminate stack, and a second additional layer 65 made from a material comprising internal channels and/or voids, for example ParaBeam^{™}. The voids and/or internal channels may be used as cooling and/or heating channels, through which a cooling and/or heating fluid may be supplied to heat and/or cool the preform element from below.

Fig. 22 illustrates a fifth embodiment of a layer structure 59 for a mold element 9, wherein, in a sandwich structure, between the outer layers 62 made of carbon fibers, a core material 66 having a honeycomb structure is used to further reduce the weight.

In the sixth embodiment of fig. 23, a 3D-printed form shell is used as the layer structure 59, preferably again comprising cooling and/or heating channels 67 for supplying cooling and/or heating fluid.

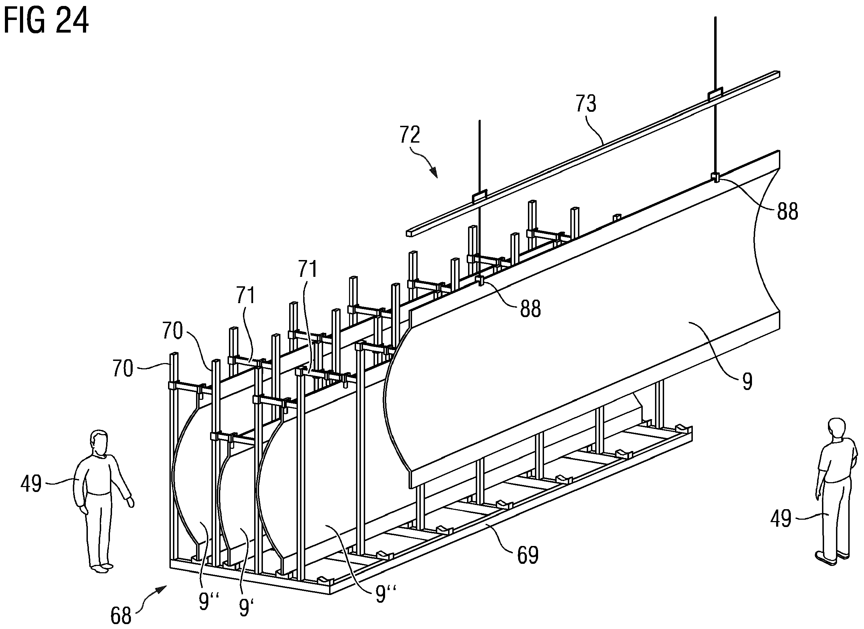

Fig. 24 illustrates a first manner to store and/or transport and move mold elements 9, 9', 9'', for example when a mold element 9, 9', 9'' is to be exchanged at a mold element support device 2. To this end, a transport and/or storage device 68 can be used, wherein fig. 24 shows a first embodiment of such a transport and/or storage device 68. The transport and/or storage device 68 comprises a frame 69, on which vertical beams 70 are positioned having height-adjustable holders 71 mounted thereon to hold vertically positioned mold elements 9, 9', 9" in an upright position, that is, vertical orientation. To move a mold element 9, 9', 9'' to and/or from the mold element support device 2, a lifting device 72, in fig. 24 a crane 73 with grippers 88, can be employed.

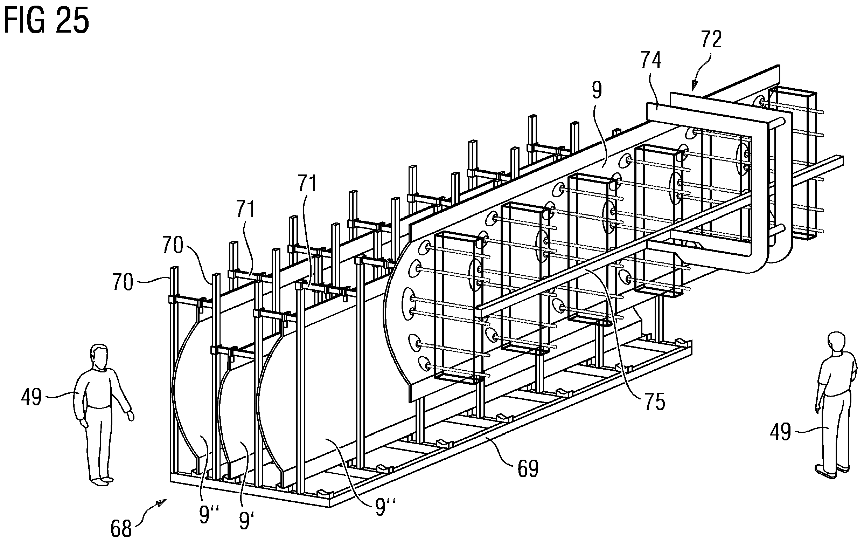

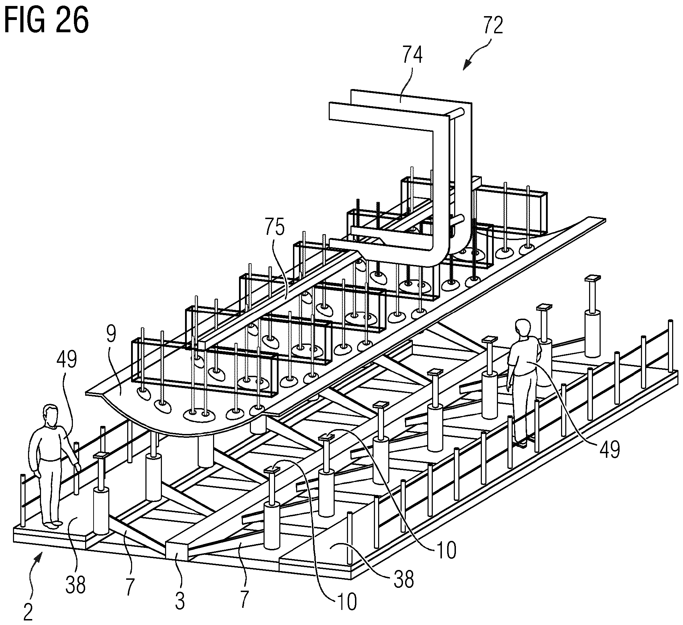

An especially preferred embodiment is shown with respect to figures 25 and 26. Here, a vacuum lifter 74 having a rotatable yoke 75 is used as lifting device 72, wherein the yoke 75 is rotatable such that, for placement of the vacuum-lifted mold element 9 of the support portions 10 of the mold element support device 2 the mold element 9 can be rotated from the vertical position shown in figure 25 into a horizontal orientation shown in fig. 26.

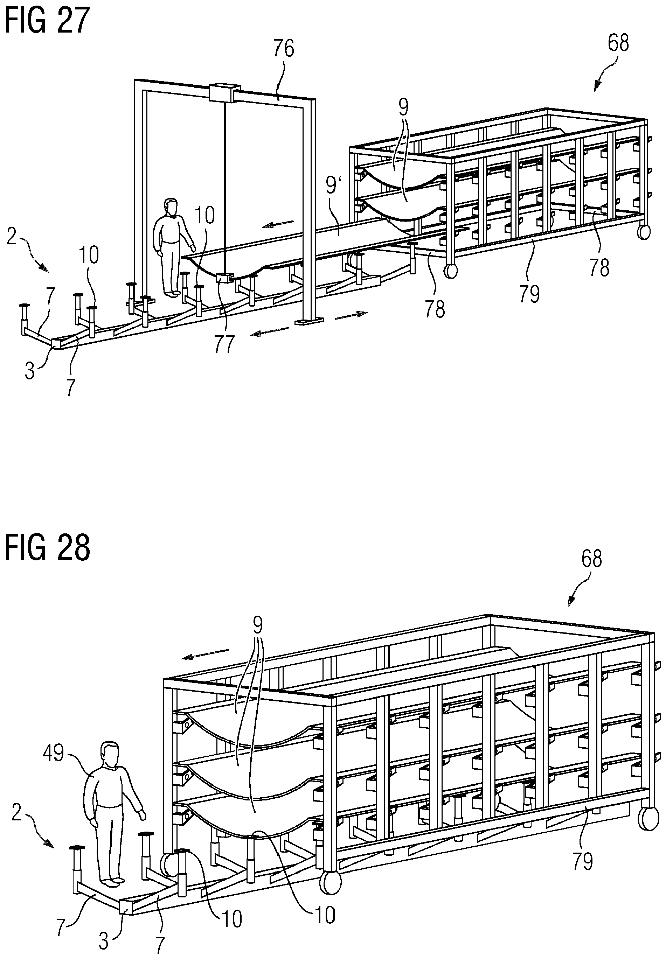

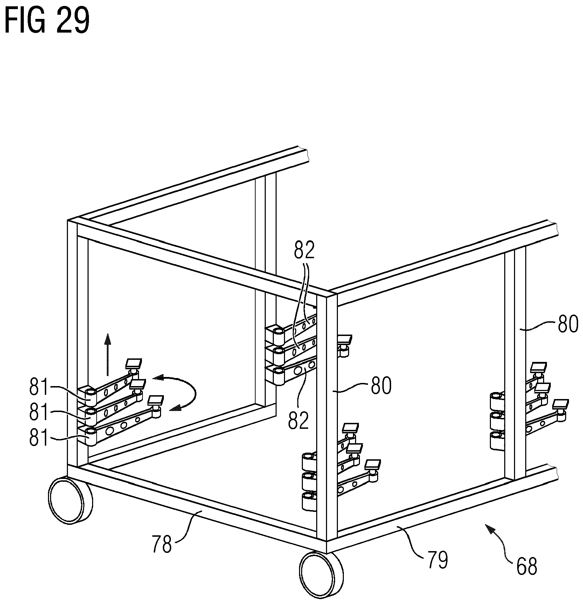

It is also possible to actually transport and/or store the mold elements 9, 9', 9" in a horizontal orientation, as, for example, shown in figures 27 to 33. Here, a different embodiment of a transport and/or storage device 68 is used, which will be described in detail later. Using an overhang crane 76 having a gripper 77, a mold element 9' can be pulled out from the transport and/or storage device 68 over the already adjusted mold element support device 2 and can then be lowered onto the support portions 10. In particular, mold elements 9, 9', 9" can also be slid onto the mold element support device 2, in particular if the contact surfaces 31 are of a low friction material and/or comprise rollers 37.

As shown in fig. 28, alternatively, if the horizontal beams 78 of the transport and/or storage device 68 are removed, the transport and/or storage device 68 can even be moved over the mold element support device 2 such that the lowest mold element 9 can simply be lowered onto the support portions 10 of the column elements 3.

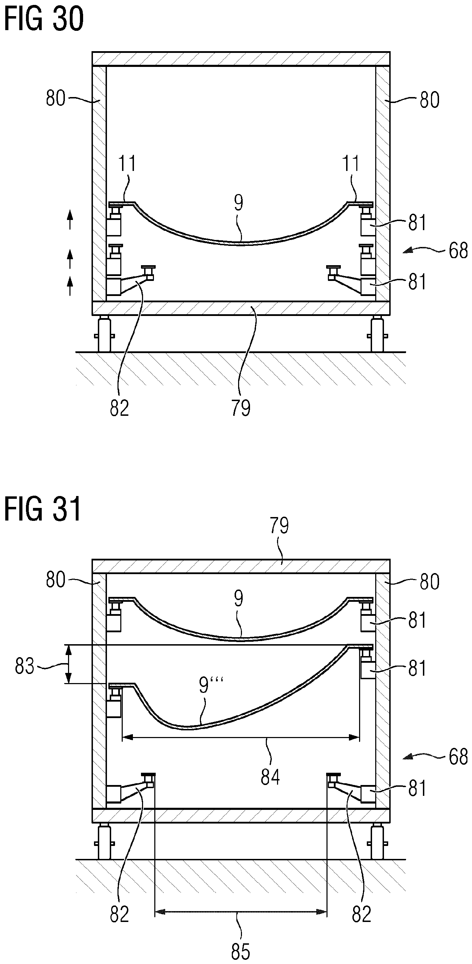

Generally, as shown in the partial view of fig. 28, the transport and/or storage device in the second embodiment may also comprise a frame structure 79 comprising vertical beams 80. In the embodiment shown here, three groups of support elements 81 are mounted to the vertical beams 80, wherein, for each beam 80, the support element 81 of the first group is in the respective lowest position, the support element 81 of the second group in the middle position and the support element 81 of the third group in the uppermost position. The support elements all comprise swivel arms 82 to adjust for different widths of the mold elements 9, 9', 9". Furthermore, all support elements 81 are height adjustable. If, now, as shown in figure 30, a mold element has been placed onto the group of uppermost support elements 81, the support elements 81 of the third group can be moved up to bring the mold element 9 into a respective transport and/or storage position. Here, again, the mold element 9 is supported on its flanges 11.

As shown in fig. 31, the support elements 81 may be individually height-adjustable to provide for height differences 83, as shown for the mold element 9‴ supported by the second group of support elements 81 in fig. 31. As already discussed with regard to the swivel arms 22, analogously, the swivel arms 82 allow adjustment to different widths 84, 85 as shown for the first and second group of support elements 81 in fig. 31. Hence, the transport and/or storage device 68 of this embodiment can easily be adjusted for different shapes and/or sizes of mold elements 9, 9', 9'', 9''', comparable to the mold element support device 2.

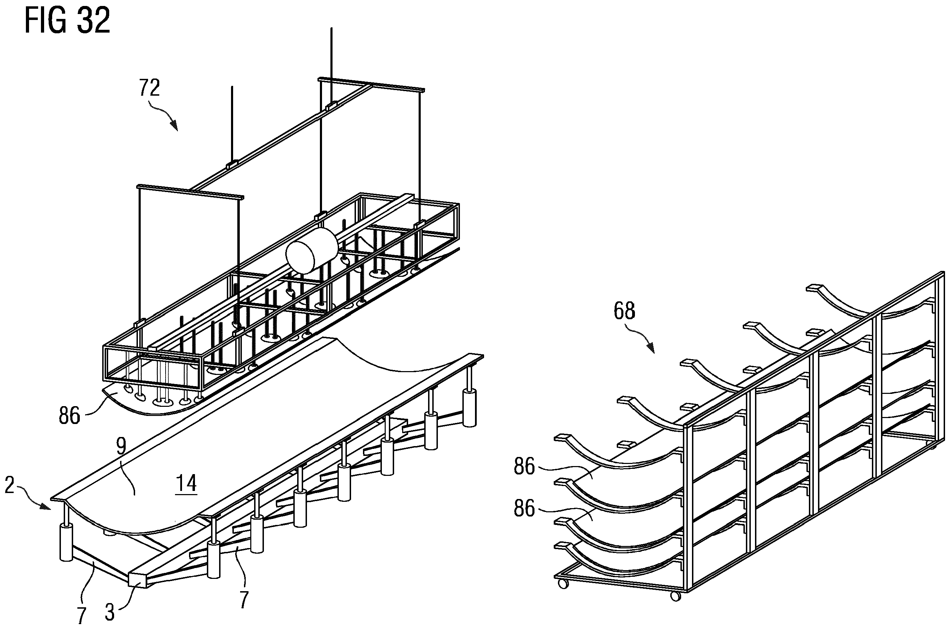

Like or even the same transport and/or storage devices 68 can also be used for transport and/or storage of the preform elements manufactured. For example, as shown in fig. 32, a transport and/or storage device 68 as described in EP 22174530.0 can be used. Here, it is also shown that the lifting devices used for mold elements 9, 9', 9'', 9‴ can also be used for lifting manufactured or at least packed preform elements 86 from the molding surface 14 to the transport and/or storage device 68.

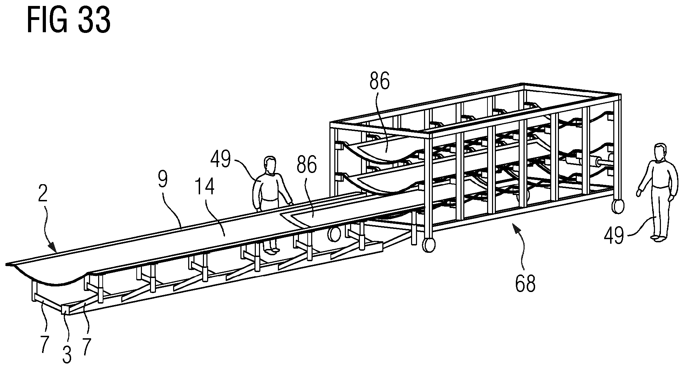

As shown in fig. 33, most preferably, the transport and/or storage device 68 already described with respect to figures 27 to 29 may also be used for preform elements 86, for example, by sliding the preform element 86 from the mold element 9 and its molding surface 14 onto the support elements 81 already adjusted regarding the shape and size of the preform element 86.

Although the present invention has been described in detail with reference to the preferred embodiment, the present invention is not limited by the disclosed examples from which the skilled person is able to derive other variations without departing from the scope of the invention.

## Claims

1. Mold element support device (2) for a manufacturing assembly (1) for preform elements (86) and/or precast elements and/or prepackaged elements, in particular for a wind turbine blade, the mold element support device (2) comprising multiple upper support portions (10) for carrying a longitudinal mold element (9, 9', 9", 9‴) for manufacturing a preform element (86) and/or a precast element and/or a prepackaged element,
**characterized in that** the mold element support device (2) further comprises a longitudinal carrier element (3), in particular a carrier beam, for the longitudinal mold element (9, 9', 9" , 9‴) and a positioning device (6) having multiple pivotable, in particular horizontally extending, swivel arms (7, 7'), which are attached to the carrier element (3) at one end and have a respective support portion (10) attached thereto at the other end.

2. Mold element support device according to claim 1, **characterized in that** it further comprises height adjustment devices (8) for each support portion (10), in particular arranged between the swivel arm (7, 7') and its support portion (10) .

3. Mold element support device according to claim 2, **characterized in that** each height adjustment device (8) comprises a telescopic device and/or a controllable, in particular electric and/or hydraulic, actuator.

4. Mold element support device according to one of the preceding claims, **characterized in that** the swivel arms (7, 7') are attached to the carrier element (3) by attachment means (4), wherein a pair of two associated swivel arms (7, 7') extending to different sides of the carrier element (3) is attached by at least one of the attachment means (4) and/or the attachment means (4), as part of the positioning device (6), are releasable.

5. Mold element support device according to claim 4, **characterized in that** the positioning device (6) comprises sliding elements of the attachment means (4) slidable on the carrier element (3) when the attachment means (4) is at least partly released.

6. Mold element support device according to one of the preceding claims, **characterized in that** the positioning device (6) further comprises a length adjusting means for the swivel arms (7, 7') and/or exchangeable swivel arms (7, 7') of different lengths.

7. Mold element support device according to claim 3, **characterized in that** it further comprises a column element (24) having a support portion (10) thereon and extending in a height direction (21), which is supported, in particular slidable in the longitudinal direction (12), on the carrier element (3).

8. Mold element support device according to one of the preceding claims, **characterized in that** wheels (22) and/or support legs (13) for supporting the carrier element (3) on a floor and/or a tow coupling (26) are attached to the carrier element (3).

9. Mold element support device according to one of the preceding claims, **characterized in that** the support portion (10) comprises an, in particular flat, contact surface (31) for contacting the mold element (9, 9', 9", 9‴) and a tilting device (32), in particular a ball joint (33), for tilting the contact surface (31) into different contact orientations.

10. Mold element support device according to one of the preceding claims, **characterized in that** the support portion (10) comprises a low friction material and/or rollers (37) in a contact area (30) to the mold element (9, 9', 9" , 9‴).

11. Mold element support device according to one of the preceding claims, **characterized in that** it further comprises at least one longitudinal working platform (38) for manufacturing personnel (49) to be placed longitudinally along the mold element (9, 9', 9", 9‴).

12. Mold element support device according to claim 11, **characterized in that** it further comprises a height adjustment means (40), in particular a telescopic means and/or a scissors mechanism (41), for the working platform (38).

13. Mold element support device according to one of the preceding claims, **characterized in that** the carrier element (3) comprises different module sections (29) along the longitudinal direction (12), wherein the module sections (29') are releasably attached to each other by coupling means.

14. Manufacturing assembly (1) for preform elements (86) and/or precast elements and/or prepackaged elements, comprising a mold element support device (2) according to one of the preceding claims and a mold element (9, 9', 9" , 9''') supported on the mold element support device (2).

15. Manufacturing system for preform elements (86) and/or precast elements and/or prepackaged elements, comprising at least one mold element support device (2) according to one of the preceding claims and multiple, exchangeable mold elements (9, 9', 9" , 9''') supportable on the mold element support device (2).
